**Europäisches Patentamt**

**European Patent Office**

**Office européen des brevets**

(19)

(11) Veröffentlichungsnummer : **0 406 818 B1**

(12)

# EUROPÄISCHE PATENTSCHRIFT

(45) Veröffentlichungstag der Patentschrift :
26.08.92 Patentblatt 92/35

(51) Int. Cl.⁵ : **F16L 47/02, F16L 39/00**

(21) Anmeldenummer : **90112728.2**

(22) Anmeldetag : **04.07.90**

(54) **Verfahren zum Verbinden von Kunststoff-Rohren eines Doppelrohrsystems und eine mittels dem Verfahren hergestellte Rohrverbindung.**

(30) Priorität : **07.07.89 CH 2538/89**

(43) Veröffentlichungstag der Anmeldung :
**09.01.91 Patentblatt 91/02**

(45) Bekanntmachung des Hinweises auf die
Patenterteilung :
**26.08.92 Patentblatt 92/35**

(84) Benannte Vertragsstaaten :
**AT BE CH DE DK ES FR GB GR IT LI LU NL SE**

(56) Entgegenhaltungen :
**DE-A- 3 512 674**

(73) Patentinhaber : **GEORG FISCHER
AKTIENGESELLSCHAFT
Mühlentalstrasse 105
CH-8201 Schaffhausen (CH)**

(72) Erfinder : **Wermelinger, Jörg
Im Eschengut 18
CH-8200 Schaffhausen (CH)**

EP 0 406 818 B1

EP 0 406 818 B1

## Beschreibung

Die Erfindung betrifft ein Verfahren zum Verbinden von Kunststoff-Rohren gemäss den Merkmalen des Oberbegriffs von Anspruch 1 und eine nach dem Verfahren hergestellte Rohrverbindung für ein Doppelrohrsystem.

Es sind Doppelrohrsysteme bekannt, bei welchen das äussere und innere Rohr zueinander mittels Distanzhaltern zentrisch gehalten werden.

Das ermöglicht die Herstellung einer Muffenverbindung bei den inneren Rohren durch zentrisches Einspannen des Rohrsystems am Aussendurchmesser der äusseren Rohre.

Bei Doppelrohrsystemen ohne gegenseitige Zentrierung des inneren und des äusseren Rohres ist es nicht möglich, auf die vorgängig beschriebene Verfahrensart eine Rohrverbindung herzustellen.

Aufgabe der vorliegenden Erfindung ist die Schaffung eines Verfahrens und einer mittels des Verfahrens hergestellten Rohrverbindung der eingangs genannten Art, mittels welchen die inneren und die äusseren Rohre fest verbindbar sind, ohne dass diese mittels Distanzhalten zueinander zentrisch gehalten werden.

Erfindungsgemäss wird dies durch die kennzeichnenden Merkmale des Verfahrensanspruchs 1 gelöst.

Die mittels des Verfahrens hergestellten Rohrverbindungen sind erfindungsgemäss durch die Merkmale von Anspruch 5 gekennzeichnet.

Weitere vorteilhafte Ausgestaltungen der Erfindung sind in den davon abhängigen Ansprüchen gekennzeichnet.

Die Erfindung ist in den beiliegenden Zeichnungen beispielsweise dargestellt und nachfolgend beschrieben. Es zeigen:

Fig. 1 die Enden von äusseren und inneren Rohren eines Doppelrohrsystems im Schnitt vor dem festen Verbinden.

Fig. 2 Muffenverbindungen von inneren und äusseren Rohren eines Doppelrohrsystems und

Fig. 3 einen Querschnitt durch den in Fig. 2 gezeigten Zwischenring.

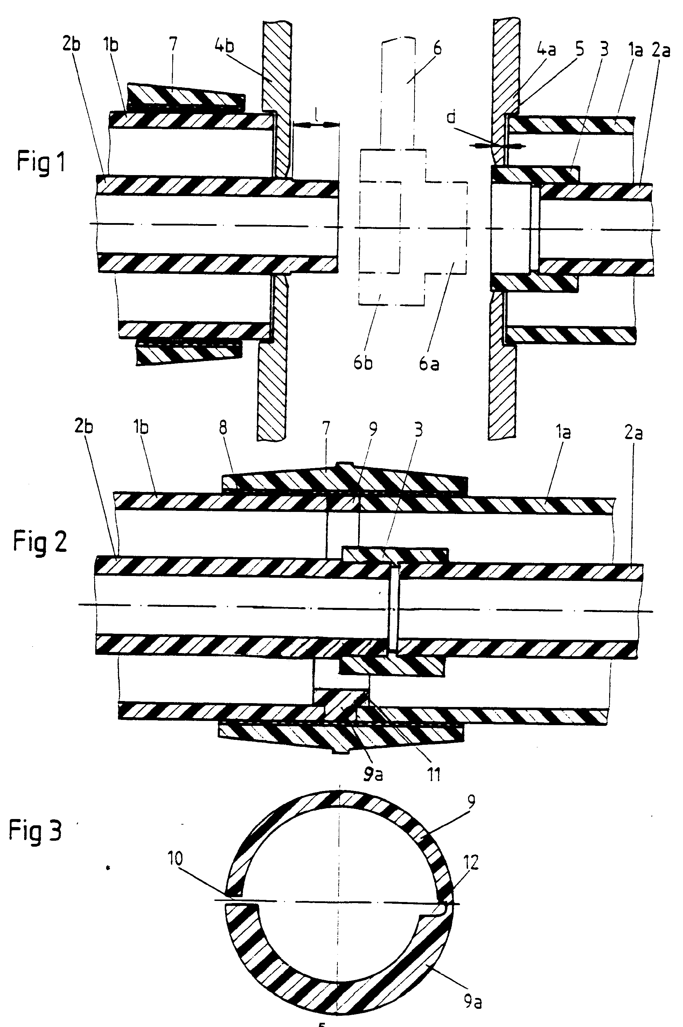

Fig. 1 zeigt die Enden von äusseren Rohren 1a, 1b und inneren Rohren 2a, 2b vor der Erstellung von Muffenverbindungen. Hierbei ist das eine Rohrende 2a bereits mit einer Muffe 3 fest verbunden.

Vorzugsweise erfolgt die Verbindung des inneren Rohres 2a, 2b mittels eines Schweissgerätes, wobei das Rohr 2a am Aussendurchmesser der Muffe 3 und das Rohr 2b an dessen Aussendurchmesser ausserhalb der Einstecklänge mittels Spannbacken 4a, 4b zueinander zentrisch eingespannt werden. Die Spannbacken 4a, 4b weisen im Spannbereich bis zum Aussendurchmesser der äusseren Rohre 1a, 1b eine möglichst geringe Dicke d auf, wobei gleichzeitig durch einen Zentrierabsatz 5 an den Spannbacken die äusseren Rohre mit Spiel auch zentrisch fixiert werden.

Zwischen den Enden der inneren Rohre 2a, 2b wird dann eine Heizvorrichtung 6 mit einem Heizzapfen 6a und einer Heizbüchse 6b eingeschwenkt, wobei durch Verschieben der Spannbacken 4a, 4b in bekannter Weise der Innendurchmesser der Muffe 3 und der Aussendurchmesser des Rohres 2b mittels der Heizvorrichtung 6 erwärmt werden. Danach wird die Heizvorrichtung 6 aus dem Bereich der Spannbacken 4a, 4b herausgeschwenkt und die Schweissmuffenverbindung wird durch gegenseitiges Verschieben der Rohre 2a, 2b mittels den verschiebbaren Spannbacken 4a, 4b hergestellt.

Wie aus Fig. 1 ersichtlich, sind die äusseren Rohre 1a, 1b ausgehend, vom jeweiligen Verbindungsende der inneren Rohre 2a, 2b mindestens um die Dicke d der Spannbacken 4a, 4b kürzer ausgebildet.

Dies ist erforderlich, damit die inneren Rohre zum Verbinden zentrisch festgehalten werden können. Die zwischen den äusseren Rohren 1a, 1b entstehende Lücke von mindestens 2d ermöglicht eine Sichtprüfung der inneren Rohrverbindung auf Dichtheit vor dem Verbinden der äusseren Rohre. Die äusseren Rohre 1a, 1b werden dann mit einer vorher aufgeschobenen Elektro-Schweissmuffe 7 verbunden. Da die Heizwicklung 8 auch im mittleren Bereich der Schweissmuffe 7 Wärme erzeugen kann, muss verhindert werden, dass die beiden Rohrenden der Rohre 1a, 1b zu stark aufschmelzen und nach innen einfallen. Dies wird durch das Einschieben eines Zwischenringes 9 in die Lücke verhindert.

Wie aus Fig. 3 ersichtlich, weist der Zwischenring 9 einen radialen Schlitz 10 auf, wobei er soweit aufgebogen werden kann, dass er über die Muffenverbindung der inneren Rohre 2a, 2b steckbar ist und zwischen den Rohren 1a, 1b die Lücke ausfüllt. (Sieh Fig. 2 oben).

Danach wird in bekannter Weise mittels der Elektroschweissmuffe 7 die Schweissverbindung hergestellt, wobei die Enden der äusseren Rohre 1a, 1b und der Zwischenring fest und mediendicht mit der Elektro-Schweissmuffe 7 verbunden werden.

Bei der in Fig. 2 unten gezeigten Ausführungsvariante des Zwischenringes 9a weist dieser eine grössere Wanddicke und beidseits je einen Absatz 11 auf. Dadurch wird das Einfallen der Rohre 1a, 1b nach innen mit Sicherheit vermieden.

Zum besseren Aufbiegen des Zwischenringes 9, 9a kann dieser bei grösseren Wanddicken mit einem Film-

2

scharnier 12 versehen werden, wie dies aus Fig. 3 untere Hälfte ersichtlich ist.

Neben der Muffen-Schweissverbindung der inneren Rohre 2a, 2b kann auch eine Muffen-Klebeverbindung angewendet werden, wobei hier ebenfalls eine zentrische Halterung mittels den Spannbacken 4a, 4b gegeben sein muss, so dass die Schweissmuffenverbindung der äusseren Rohre 1a, 1b mit Einfügen des Zwischenringes 9, 9a, wie beschrieben, ausgebildet ist.

## Patentansprüche

1. Verfahren zum Verbinden von inneren und äusseren Kunststoff-Rohren eines Doppelrohrsystems, wobei die inneren Rohre mittels einer Muffenverbindung und die äusseren Rohre durch eine Schweissmuffe fest verbunden werden, dadurch gekennzeichnet, dass die verbindenden Enden der inneren Rohre mittels Halte-Backen zentrisch zueinander gehalten und mit diesen zu deren festen Verbindung axial verschoben werden, dass die äusseren Rohre an der Verbindungsstelle eine mindestens der die Dicke der Haltebakken entsprechende Distanz zueinander aufweisen, dass nach dem Verbinden der inneren Rohre ein mit einem radialen Schlitz versehener, aufweitbarer Zwischenring über das innere Rohr radial steckbar zwischen die Enden der äusseren Rohre eingesetzt wird und dass die beiden Enden der äusseren Rohre und der Zwischenring mittels einer Schweissmuffe fest verbunden werden.

2. Verfahren nach Anspruch 1, dadurch gekennzeichnet, dass die Verbindung der inneren Rohre eine Klebverbindung ist.

3. Verfahren nach Anspruch 1, dadurch gekennzeichnet, dass die Verbindung der inneren Rohre eine Schweissverbindung ist.

4. Verfahren nach einem der Ansprüche 1 bis 3, dadurch gekennzeichnet, dass die Verbindung der äusseren Rohre mittels einer eine elektrische Heizwicklung aufweisenden Schweissmuffe erfolgt.

5. Verbindung von inneren und äusseren Kunststoffrohren eines Doppelrohrsystems hergestellt nach dem Verfahren gemäss einem der Ansprüche 1 bis 4, wobei die inneren Rohre eine Muffenverbindung aufweisen, dadurch gekennzeichnet, dass zwischen den Enden der äusseren Rohre (1a,1b) ein mit einem radialen Schlitz (10) versehener, aufweitbarer Zwischenring (9a,9b) angeordnet ist und dass am Aussenumfang der Enden der äusseren Rohre (1a,1b) und des Zwischenringes (9,9a) eine Elektro-Schweissmuffe (7) angeordnet ist

6. Verbindung nach Anspruch 5, dadurch gekennzeichnet, dass der Zwischenring (9a) an beiden Seiten je einen den Innenumfang der äusseren Rohre (1a, 1b) unterstützenden Absatz (11) aufweist.

7. Verbindung nach Anspruch 5 oder 6, dadurch gekennzeichnet, dass der Zwischenring (9a) ein Filmscharnier aufweist.

## Claims

1. Process for joining inner and outer plastic pipes of a double pipe system, the inner pipes being fixedly connected by means of a sleeve joint and the outer pipes being fixedly connected by means of a welded sleeve, characterised in that the joining ends of the inner pipes are held concentrically with respect to each other by means of holding jaws and are pushed axially with these to join them firmly, in that at their junction the outer pipes have a spacing from each other which corresponds at least to the thickness of the holding jaws, in that after joining of the inner pipes an enlargeable intermediate ring provided with a radial slot is inserted over the inner pipe radially insertably between the ends of the outer pipes, and in that the two ends of the outer pipes and the intermediate ring are fixedly joined by means of a welding sleeve.

2. Processs according to claim 1, characterised in that the joint of the inner pipes is an adhesive joint.

3. Process according to claim 1, characterised in that the joint of the inner pipes is a welded joint.

4. Process according to one of claims 1 to 3, charaterised in that the joining of the outer pipes is effected by means of a welding sleeve having an electrical heating coil.

5. Joint of inner and outer plastic pipes of a double pipe system produced in accordance with the process according to one of claims 1 to 4, wherein the inner pipes have a sleeve joint, characterised in that between the ends of the outer pipes (1a, 1b) there is arranged an enlargeable intermediate ring (9a, 9b) provided with a radial slot (10) and in that on the outer circumference of the ends of the outer pipes (1a, 1b) and of the intermediate ring (9, 9a) there is arranged an electro-welding sleeve (7).

6. Joint according to claim 5, characterised in that on both sides the intermediate ring (9a) has a shoulder (11) supporting the inner circumference of the outer pipes (1a, 1b).

7. Joint according to claim 5 or 6, characterised in that the intermediate ring (9a) has a web hinge.


## Revendications

1.- Procédé pour l'assemblage de tubes en matière plastique intérieurs et extérieurs d'un système à double tubulure dans lequel on assemble rigidement les tubes intérieurs au moyen d'un assemblage par manchon et les tubes extérieurs par un manchon soudé, caractérisé en ce que les extrémités à assembler des tubes intérieurs sont maintenues alignées au moyen de mors de maintien et sont déplacées axialement avec ceux-ci pour leur assemblage rigide, en ce que les tubes extérieurs à l'endroit de l'assemblage présentent entre-eux une distance correspondant au moins à l'épaisseur des mors, en ce que après l'assemblage des tubes intérieurs une bague intermédiaire expansible munie d'une fente radiale est introduite par dessus le tube intérieur et radialement enfilée entre les extrémités des tubes extérieurs et en ce que les deux extrémités des tubes extérieurs et la bague intermédiaire sont rigidement assemblées au moyen d'un manchon de soudage.

2.- Procédé selon la revendication 1, caractérisé en ce que l'assemblage des tubes intérieurs est un assemblage collé.

3.- Procédé selon la revendication 1, caractérisé en ce que l'assemblage des tubes intérieurs est un assemblage soudé.

4.- Procédé selon l'une des revendications 1 à 3, caractérisé en ce que l'assemblage des tubes extérieurs est réalisé au moyen d'un manchon de soudage portant un enroulement de chauffage électrique.

5.- Assemblage de tubes de matière plastique intérieurs et extérieurs d'un système à double tubulure réalisé selon les procédés de l'une des revendications 1 à 4, les tubes intérieurs présentant une jonction par manchon caractérisée en ce qu'entre les extrémités des tubes extérieurs (1a, 1b), est disposée une bague intermédiaire expansible munie d'une fente radiale (10) et en ce que sur la périphérie extérieure des extrémités des tubes extérieurs (1a, 1b) et de la bague intermédiaire (9a, 9b) est disposé un manchon de soudage électrique (7).

6.- Assemblage selon la revendication 5, caractérisé en ce que la bague intermédiaire (9a) présente sur ses deux faces un épaulement (11) soutenant la périphérie intérieure des tubes extérieurs (1a, 1b).

7.- Assemblage selon la revendication 5 ou 6, caractérisé en ce que la bague intermédiaire (9a) présente une charnière continue (bande).

Fig 1

Fig 2

Fig 3

EP 0 406 818 B1